# EUROPEAN PATENT APPLICATION

(11) **EP 1 391 336 A1**
(43) Date of publication of application: **25.02.2004**
(21) Application number: 02078440.1
(22) Date of filing: 19.08.2002
(51) Int. Cl.: B60J 7/16

(54) **Hatch for a vehicle**

(71) Applicant: Inalfa Roof Systems Group B.V., 5804 AH Venray (NL)
(72) Inventor: Hermsen, Jacobus Christian Leonardus, 5801 RH Venray (NL); Denissen, Louisa Catharina Petronella, 5821 BN Vierlingsbeek (NL)
(74) Representative: Voncken, Bartholomeus Maria Christiaan

(57) **Abstract**

There is provided an open roof assembly for a vehicle, comprising a stationary roof (1), a roof opening (2) defined in said stationary roof (1) and a panel-shaped closure means (4) having, as seen in the direction of movement of the vehicle, at least a forward edge (5) and a rearward edge, said closure means (4) in the vicinity of at least one of its forward and rearward edges being connected to the stationary roof (1) by a connecting member in such a manner, that said edge is movable substantially perpendicularly to the stationary roof (1) for moving the closure means (4) from a closed position towards an open position and vice versa. The connecting member comprises a compression member (6) for generating a compression force, said compression member (6) having a first end connected to the stationary roof (1) and a second end connected to the closure means (4), such that the distance between both ends of the compression member (6) in the closed and open positions of the closure means (4) is larger, and thus the compression force less, than in an intermediate position of the closure means (4).

## Description

The invention relates to an open roof assembly for a vehicle, comprising a stationary roof, a roof opening defined in said stationary roof and a panel-shaped closure means having, as seen in the direction of movement of the vehicle, at least a forward edge and a rearward edge, said closure means in the vicinity of at least one of its forward and rearward edges being connected to the stationary roof by a connecting member in such a manner, that said edge is movable substantially perpendicularly to the stationary roof for moving the closure means from a closed position towards an open position and vice versa.

Several types of connecting members provided in such an open roof assembly are known. Most times these connecting members comprise a large amount of parts for ensuring a proper operation of the open roof assembly.

It is an object of the present invention to provide an open roof assembly with a simplified construction and enhanced operation.

Thus, according to the invention there is provided an open roof assembly for a vehicle, comprising a stationary roof, a roof opening defined in said stationary roof and a panel-shaped closure means having, as seen in the direction of movement of the vehicle, at least a forward edge and a rearward edge, said closure means in the vicinity of at least one of its forward and rearward edges being connected to the stationary roof by a connecting member in such a manner, that said edge is movable substantially perpendicularly to the stationary roof for moving the closure means from a closed position towards an open position and vice versa, characterized in that the connecting member comprises a compression member for generating a compression force, said compression member having a first end connected to the stationary roof and a second end connected to the closure means, such that the distance between both ends of the compression member in the closed and open positions of the closure means is larger, and thus the compression force less, than in an intermediate position of the closure means.

The compression member provided in the open roof assembly according tot the invention defines a so-called "dead point mechanism". The compression member always tends to move towards an expanded position. This means, that intermediate positions of the closure means in which the compression member is more compressed than in the open or closed position of the closure means, are not stable and that the closure means will move towards the open or closed position, depending on the specific intermediate position. The open and closed positions of the closure means, however, are stable. When, for example, the closure means is in its closed position the closure means can be moved against the compression force of the compression member. As long as the position of the compression member with the highest compression force has not yet been reached, the compression member tends to move the closure means back to the closed position. However, if the position of the compression member with the largest compression force has been passed, the compression member will move the closure means towards the open position. The same procedure applies when moving the closure means from the open position towards the closed position.

The open roof assembly according to the invention only comprises very few elements, i.e. basically the stationary roof, the closure means and the compression member. Therefore, the open roof assembly according to the invention is very simple, but nevertheless effective. Assembling this open roof assembly is very easy and servicing it also becomes simpler. Finally, it costs will be reduced drastically compared to previous open roof assemblies of this type.

Although it is possible, that the closure means in the vicinity of only one of its forward an rearward edges is connected to the stationary roof by such a compression member, according to a preferred embodiment compression members are provided in the vicinity of both the forward and rearward edges of the closure means. In such an embodiment the closure means can be lifted entirely relative to the stationary roof.

For obtaining the above-mentioned "dead point mechanism" it is preferred that, as seen in a direction perpendicularly to the stationary roof, the first end of the compression member in the closed position of the closure . means is positioned at a higher level than the second end thereof, and in the open position is positioned at a lower level. Basically, the indifferent unstable position in which the closure means tends to move to the open position or closed position is reached, when the first end and the second end of the compression member are positioned at the same level. In such a position the maximum compression force will be generated by the compression member.

The closed position of the closure means will be determined by an engagement of this closure means with the stationary roof (be it directly or by means of interpositioned seals). Preferably, in such a closed position the compression member still generates some compression force, rendering said closed position very stable. For ensuring that also the open position of the closure means is stable, it is preferred that the stationary roof and closure means are provided with co-operating abutment means for defining the open position of the closure means. When the abutment means co-operate, the compression member still will generate some compression force, such that the abutment means will engage each other firmly. Rattling and shaking of the closure means then will be prevented effectively.

It is possible, for example, that the stationary roof comprises a hook member for engaging the second end of the compression member. When, according to a further embodiment of the open roof assembly according to the invention, the hook member further is shaped such as to define a guide for the second end of the compression member during movement thereof, the movement of the closure means from the open to the closed position and visa versa will be very stable.

As one example of a compression member for provision in an open roof assembly according to the invention a torsion spring is mentioned.

When, according to a still further embodiment of the open roof assembly according to the invention, the first end of the compression member is connected to a strip spanning the roof opening, a large freedom in choosing the optimum position of the compression member is obtained.

In such a case, the strip also could be used for the attachment of the hook member which would then extend upwardly from that strip.

Hereinafter the invention will be elucidated referring to the drawings, in which an embodiment of the open roof assembly according to the invention is illustrated.
Figure 1 shows partly and perspectively an embodiment of an open roof assembly according to the invention in a disassembled state;
figure 2 shows a longitudinal section of said open roof assembly in the fully closed position thereof;
figure 3 shows said open roof assembly in an intermediate position thereof, and
figure 4 shows said open roof assembly in a fully open position thereof.

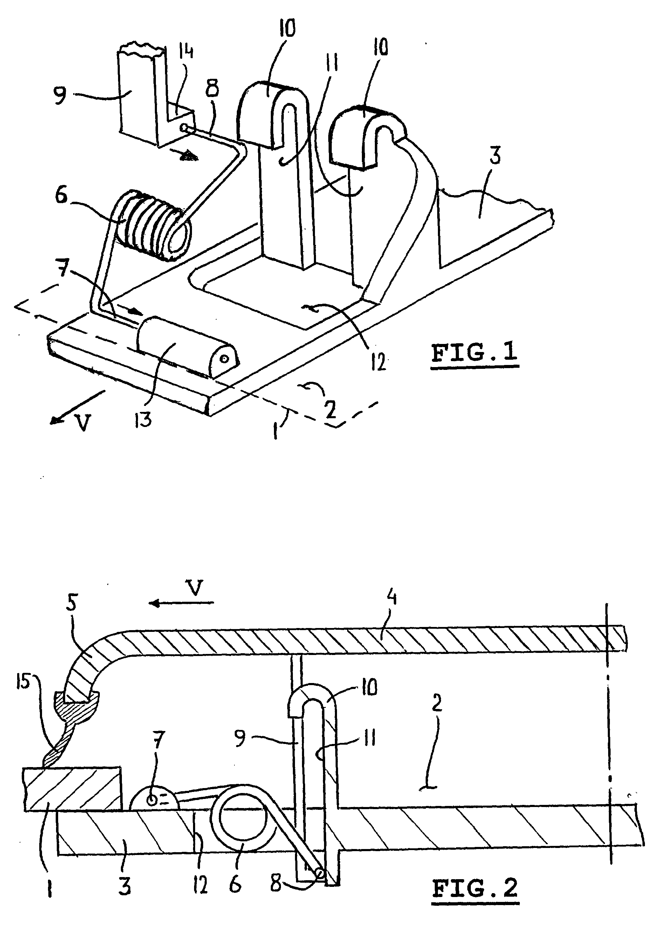

Referring to figures 1 and 2, the open roof assembly for a vehicle according tot the invention comprises a stationary roof 1 in which a roof opening 2 is defined. The roof opening 2 is spanned by a strip 3 which, at its ends(only one of which has been represented), is connected to the stationary roof 1.

The roof opening 2 defined in the stationary roof 1 can be closed by a panel-shaped closure means 4 having, as seen in the direction of movement V of the vehicle, a forward edge 5 and a rearward edge (not shown in the figures).

In the vicinity of the forward edge 5 a compression member shaped as a torsion spring 6 is provided having a first end 7 and a second end 8. The first end 7 in a pivotable manner is connected to the strip 3, whereas the second end 8, likewise in a pivotable manner, is connected to an end 14 of an arm 9 attached to the closure means 4.

The strip 3 further carries two upwardly extending hook members 10 positioned adjacent an opening 12 defined in the strip 3.

Referring to figure 1, the open roof assembly is assembled in such a manner, that the second end 8 of the torsion spring 6 is positioned in a corresponding opening provided in the arm 9, whereas the first end 7 of the torsion spring 6 is positioned in a corresponding opening provided in the strip 3 (or in a suitable projection 13 of the strip 3). The arm 9 then with its end 14 is positioned between the hook members 10, in which position the second end 8 of the spring member 7 will engage guide surfaces 11 of the hook members 10.

The strip 3 can be attached to the stationary roof 1 by any appropriate means, such as for example adhesive, welding, rivets. However, the strip also may be an integral part of the stationary roof 3.

In the closed position of the closure means 4 (fig. 2) in which, for example, a sealing means 15 attached to the closure means 4 engages the stationary roof 1, the first end 7 of the torsion spring 6 is positioned at a higher level than the second end 8 of the torsion spring 6. The dimensions of the torsion spring 6 are such, that in the fully closed position of the closure means 4 the torsion spring 6 still generates a compression force urging the second end 8 against the guiding surfaces 11 and thus generating a force tending to move the closure means 4 downwardly. As a result, the closure means 4 obtains a stable closed position. In this closed position the central part of the torsion spring 6 is positioned in the opening 12 of the strip 3. The arm 9 attached to the closure means 4 is partly (mostly with its end 14) positioned between the hook members 10, such that a sideward movement of the closure means 4 relative to the stationary roof 1 will be prevented. A longitudinal movement of the closure means 4 relative to the stationary roof 1 will be prevented by the co-operation between the guiding surfaces 11 and second end 8 of the torsion spring 6 under influence of the compression force generated by the torsion spring 6.

Starting from the position shown in figure 2, it is possible to push (preferably manually) the closure means 4 upwardly. The second end 8 of the torsion spring 6 will than ride upwardly along the guiding surfaces 11 of the hook members 10, as a result of which the distance between the first end 7 and second end 8 of the torsion spring 6 will diminish. Thus, the compression force generated by the torsion spring 6 will increase.

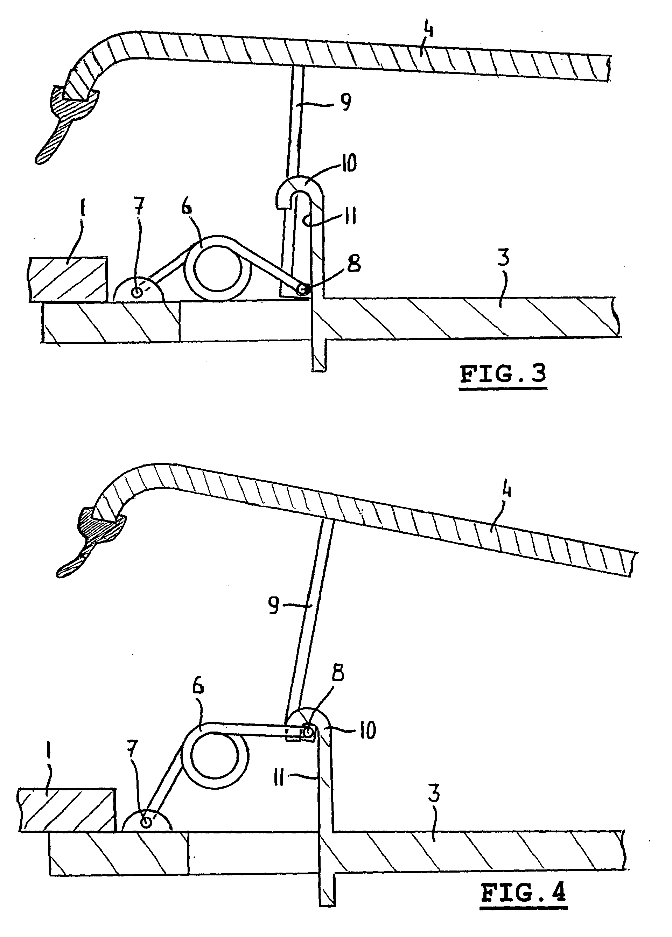

Figure 3 shows a position, in which the closure means 4 is in an intermediate position between the closed position (fig. 2) and a fully opened position (fig. 4 to be described later). In this intermediate position the second end 8 of the torsion spring 6 is positioned at substantially the same level as the first end 7; in this position the distance between the first end 7 and second end 8 is minimal, and the compression force maximal. Theoretically, this position is indifferently instable, that means that starting from this position the closure means 4 will tend to move upwardly or downwardly.

Shortly after having reached the position according to fig. 3 the second end 8 of the torsion spring 6 will reach a position in which it is at a higher level than the first end 7 of the torsion spring 6. Then the compression force generated by the torsion spring 6 will move the second end 8 upwardly along the guiding surfaces 11, until the upper curved ends of the hook members 10 will engage said second end 8 and will prevent a further upward movement of the second end 8, and thus of the arm 9 with closure means 4. Thus, a co-operation between the second end 8 of the torsion spring 6 and hook members 10 defines the fully opened position of the closure means 4. Preferably in such a position the torsion spring 6 still generates a compression force, rendering the open position of the closure means 4 stable.

Although not shown in the figures, it is possible that a corresponding connection member (compression member) is also positioned in the vicinity of the rearward edge of the closure means 4.

Instead of the torsion spring 6 also other compression members, such as a compression spring, could be used.

In the illustrated embodiment the hook members 10 and second end 8 of the torsion spring 6 define co-operating abutment means for defining the open position of the closure means 4. However, also other embodiments of abutment means are possible. The hook members 10 also could engage the arm 9 or other structures formed on the closure means 4. Likewise, hook members 10 could be provided on the closure means 4 for engagement with the first end 7 of the torsion spring 6 or other appropriate structures provided on the stationary roof 1 or strip 3. Further it is not necessary that a strip 3 is provided; the torsion spring 6 (or other compression member) could be attached directly to the stationary roof 1, as could apply too for the abutment means.

The invention is not limited to the embodiment described before which can be varied widely within the scope of the invention as defined by the appending claims.

## Claims

1. Open roof assembly for a vehicle, comprising a stationary roof, a roof opening defined in said stationary roof and a panel-shaped closure means having, as seen in the direction of movement of the vehicle, at least a forward edge and a rearward edge, said closure means in the vicinity of at least one of its forward and rearward edges being connected to the stationary roof by a connecting member in such a manner, that said edge is movable substantially perpendicularly to the stationary roof for moving the closure means from a closed position towards an open position and vice versa, **characterized in that** the connecting member comprises a compression member for generating a compression force, said compression member having a first end connected to the stationary roof and a second end connected to the closure means, such that the distance between both ends of the compression member in the closed and open positions of the closure means is larger, and thus the compression force less, than in an intermediate position of the closure means.

2. Open roof assembly according to claim 1, wherein compression members are provided in the vicinity of both the forward and rearward edges of the closure means.

3. Open roof assembly according to claim 1 or 2, wherein, as seen in a direction perpendicularly to the stationary roof, the first end of the compression member in the closed position of the closure means is positioned at a higher level than the second end thereof, and in the open position is positioned at a lower level.

4. Open roof assembly according to any of the previous claims, wherein the stationary roof and closure means are provided with co-operating abutment means for defining the open position of the closure means.

5. Open roof assembly according to claim 4, wherein the stationary roof comprises a hook member for engaging the second end of the compression member.

6. Open roof assembly according to claim 5, wherein the hook member further is shaped such as to define a guide for the second end of the compression member during movement thereof.

7. Open roof assembly according to any of the previous claims, wherein the compression member is a torsion spring.

8. Open roof assembly according to any of the previous claims, wherein the first end of the compression member is connected to a strip spanning the roof opening.

9. Open roof assembly according to claim 8 and claim 5 or 6, wherein the hook member is attached to and extends upwardly from the strip.
